(19) **Europäisches Patentamt / European Patent Office / Office européen des brevets**

(11) **EP 4 712 628 A1**

(12) **EUROPEAN PATENT APPLICATION**
published in accordance with Art. 153(4) EPC

(43) Date of publication:
**18.03.2026 Bulletin 2026/12**

(21) Application number: **24818683.5**

(22) Date of filing: **05.06.2024**

(51) International Patent Classification (IPC):
**H04W 72/0446** (2023.01)

(52) Cooperative Patent Classification (CPC):
**H04W 24/02; H04W 72/0446; H04W 72/40**

(86) International application number:
**PCT/CN2024/097515**

(87) International publication number:
**WO 2024/251151 (12.12.2024 Gazette 2024/50)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **09.06.2023 CN 202310688331**

(71) Applicant: **Huawei Technologies Co., Ltd.**
**Shenzhen, Guangdong 518129 (CN)**

(72) Inventors:
• **XU, Jiaojiao**
  **Shenzhen, Guangdong 518129 (CN)**
• **WANG, Mingzhe**
  **Shenzhen, Guangdong 518129 (CN)**
• **SU, Hongjia**
  **Shenzhen, Guangdong 518129 (CN)**

(74) Representative: **Körber, Martin Hans**
**Mitscherlich PartmbB**
**Karlstraße 7**
**80333 München (DE)**

(54) **COMMUNICATION METHOD AND APPARATUS**

(57) This application provides a communication method and apparatus, and belongs to the field of communication technologies, to implement integrated sensing and communication based on a new sidelink SL slot structure. In the method, a terminal apparatus may perform sensing by reusing a sidelink time domain resource. To be specific, the terminal apparatus may perform sensing by sending a sensing sequence and/or receiving a sensing echo on a first time domain resource and/or a second time domain resource of an SL slot. In other words, the terminal apparatus may perform sensing while communicating with another terminal apparatus. In this way, integrated sensing and communication can be implemented based on the foregoing SL slot structure.

```
┌─────────────────────────────────────────┐
│      S601: Determine an SL slot          │
└─────────────────────────────────────────┘
                    │
                    ▼
┌─────────────────────────────────────────┐
│ S602: Send a sensing sequence on a first │
│   time domain resource, and/or receive a │
│   sensing echo on a second time domain   │
│   resource                               │
└─────────────────────────────────────────┘
```

FIG. 6

EP 4 712 628 A1

## Description

This application claims priority to Chinese Patent Application No. 202310688331.8, filed with the China National Intellectual Property Administration on June 9, 2023 and entitled "COMMUNICATION METHOD AND APPARATUS", which is incorporated herein by reference in its entirety.

## TECHNICAL FIELD

This application relates to the field of communication technologies, and in particular, to a communication method and apparatus.

## BACKGROUND

Integrated sensing and communication (integrated sensing and communication, ISAC) is a new information processing technology that implements collaboration between a sensing function and a communication function based on software and hardware resource sharing or information sharing. In addition, A spectrum, a hardware platform, a baseband waveform, and a signal processing method may be shared between communication and sensing by using ISAC, thereby improving spectral efficiency, energy efficiency, and hardware efficiency of a system, and obtaining an integration gain (integration gain). Currently, integrated sensing and communication may be implemented through an air interface.

However, an existing slot structure cannot implement integrated sensing and communication.

## SUMMARY

Embodiments of this application provide a communication method and apparatus, to implement integrated sensing and communication based on a new SL slot structure.

To achieve the foregoing objective, this application uses the following technical solutions.

According to a first aspect, a communication method is provided, and is performed by a terminal apparatus. The method includes: determining a sidelink SL slot; and sending a sensing sequence on a first time domain resource, and/or receiving a sensing echo on a second time domain resource, where the SL slot includes at least one first symbol, the first symbol includes at least one time domain resource of the first time domain resource and the second time domain resource, the first time domain resource is for sending the sensing sequence, and the second time domain resource is for receiving the sensing echo.

It can be learned from the method according to the first aspect that, the terminal apparatus may perform sensing by reusing a sidelink time domain resource. To be specific, the terminal apparatus may perform sensing on the first time domain resource and/or the second time domain resource of the SL slot. In other words, the terminal apparatus may perform sensing while communicating with another terminal apparatus. For example, in a communication process, the terminal apparatus may send the sensing sequence, and receive the sensing echo corresponding to the sensing sequence, to perform sensing; in the communication process, the terminal apparatus may send the sensing sequence, and the another terminal apparatus receives the sensing echo corresponding to the sensing sequence, to perform sensing; or in the communication process, the terminal apparatus may receive the sensing echo corresponding to the sensing sequence sent by the another terminal apparatus, to perform sensing. In this way, integrated sensing and communication can be implemented based on the foregoing SL slot structure.

In a possible design solution, the first symbol further includes a third time domain resource, the third time domain resource is for switching from completing sending the sensing sequence to starting to receive the sensing echo, and the third time domain resource is adjacent to the first time domain resource and the second time domain resource. In other words, when the terminal apparatus sends the sensing sequence and receives the sensing echo by using one set of antennas, the third time domain resource is a time domain resource reserved for switching from sending to receiving by the antenna, to ensure that the antenna when switching to receiving corresponds to the second time domain resource, and then ensure that the antenna can normally receive the sensing echo.

Optionally, the first symbol includes M time units, the first time domain resource includes m1 consecutive time units, the second time domain resource includes m2 consecutive time units, the third time domain resource includes m3 consecutive time units, M is an integer greater than or equal to 3, and m1, m2, and m3 are all integers greater than or equal to 1. In other words, the time domain resources may be flexibly divided at a smaller granularity, so that each time domain resource can be represented at a smaller granularity. It may be understood that, the time unit is merely an example. In a future communication system, the "time unit" may alternatively be replaced with any possible representation manner. This is not limited.

Optionally, the first symbol further includes a fourth time domain resource, the fourth time domain resource is for receiving the sensing echo, start time of the fourth time domain resource is the same as start time of the first time domain resource, and end time of the fourth time domain resource is between start time of the second time domain resource and end time of the second time domain resource. It may be understood that, when the terminal apparatus sends the sensing sequence and receives the sensing echo by using the one set of antennas, because the sensing echo cannot be received on the first time domain resource and the third time domain resource, the terminal apparatus has a blind range in which sensing cannot be performed. When there are a plurality of sets of antennas, the fourth time domain resource is a time domain resource set for another antenna that is other than the antenna sending the sensing sequence and that receives the sensing echo, and the fourth time domain resource includes at least the first time domain resource and the second time domain resource. In this way, it can be avoided that the sensing echo cannot be received on time domain resources corresponding to the first time domain resource and the second time domain resource, thereby avoiding the blind range.

Further, the first symbol includes M time units; the first time domain resource includes m1 consecutive time units; the second time domain resource includes m2 consecutive time units; the third time domain resource includes m3 consecutive time units; the fourth time domain resource includes the m1 consecutive time units and the m3 consecutive time units, or the fourth time domain resource includes the m1 consecutive time units, the m3 consecutive time units, and at least a part of the m2 consecutive time units; and M is an integer greater than or equal to 3, and m1, m2, and m3 are all integers greater than or equal to 1. In other words, the time domain resources may be flexibly divided at a smaller granularity, so that each time domain resource can be represented at a smaller granularity. It may be understood that, the time unit is merely an example. In a future communication system, the "time unit" may alternatively be replaced with any possible representation manner. This is not limited.

In a possible design solution, start time of the second time domain resource is between start time of the first time domain resource and end time of the first time domain resource, and end time of the second time domain resource is greater than the end time of the first time domain resource, to flexibly set duration and positions of the first time domain resource and the second time domain resource when there are two sets of antennas that respectively send the sensing sequence and receive the sensing echo.

Optionally, the first symbol includes a $1^{st}$ time unit to an $M^{th}$ time unit, the first time domain resource includes an $i^{th}$ time unit to a $j^{th}$ time unit, the second time domain resource includes a $p^{th}$ time unit to a $q^{th}$ time unit, the $p^{th}$ time unit is between the $i^{th}$ time unit and the $j^{th}$ time unit, and the $q^{th}$ time unit is between the $j^{th}$ time unit and the $M^{th}$ time unit. In other words, the time domain resources may be flexibly divided at a smaller granularity, so that each time domain resource can be represented at a smaller granularity. It may be understood that, the time unit is merely an example. In a future communication system, the "time unit" may alternatively be replaced with any possible representation manner. This is not limited.

In a possible design solution, the start time of the first time domain resource is greater than or equal to start time of the first symbol. Specific time may be flexibly selected based on an actual situation. This is not limited.

Optionally, the end time of the second time domain resource is less than or equal to end time of the first symbol. Specific time may be flexibly selected based on an actual situation. This is not limited.

Further, the first symbol is an automatic gain control AGC symbol. The AGC symbol in the SL slot is for performing AGC adjustment by a receiving apparatus, and the receiving apparatus does not pay attention to specific content in the AGC symbol. Therefore, performing sensing by using the AGC symbol can be compatible with the existing SL slot structure, and existing communication performance is not affected while sensing is implemented.

Optionally, the first symbol further includes a fifth time domain resource, the fifth time domain resource is for switching from completing receiving the sensing echo to starting to send or receive a second symbol, and the second symbol is adjacent to the first symbol; and start time of the fifth time domain resource is the same as the end time of the second time domain resource. In other words, the first symbol may be a last symbol in the SL slot, and the second symbol may be a $1^{st}$ symbol in a next slot adjacent to the slot. When the antenna of the terminal apparatus switches from completing receiving the sensing echo to starting to send or receive the second symbol, time may be reserved for transmit/receive switching of the antenna by using the fifth time domain resource, to ensure that the antenna normally sends or receives the second symbol.

Further, the first symbol is a guard period GAP symbol. The GAP symbol in the SL slot is the last symbol in each slot, and is for transmit/receive switching of the antenna of the terminal apparatus. Transmit/receive switching duration of the antenna may only use a part of time domain resources in the GAP symbol and not all time domain resources. Therefore, a part of time domain resources in the GAP symbol may be for performing sensing, and another part of time domain resources may be for transmit/receive switching of the antenna, so that the existing SL slot structure can be compatible, and existing communication performance is not affected while sensing is implemented.

In a possible design solution, the sensing echo is an echo corresponding to the sensing sequence. After sending the sensing sequence, the antenna of the terminal apparatus receives the sensing echo corresponding to the sensing sequence, to implement sensing.

According to a second aspect, a communication apparatus is provided. The communication apparatus includes modules configured to perform the method according to the first aspect, for example, a transceiver module and a processing module. For example, the processing module is configured to determine a sidelink SL slot; and the transceiver module is configured to send a sensing sequence on a first time domain resource, and/or receive a sensing echo on a second time domain resource. The SL slot includes at least one first symbol, the first symbol includes at least one time domain resource of the first time domain resource and the second time domain resource, the first time domain resource is for sending the sensing sequence, and the second time domain resource is for receiving the sensing echo.

Optionally, the transceiver module may include a sending module and a receiving module. The sending module is configured to implement a sending function of the communication apparatus according to the second aspect, and the receiving module is configured to implement a receiving function of the communication apparatus according to the second aspect.

Optionally, the communication apparatus according to the second aspect may further include a storage module. The storage module stores a program or instructions. When the processing module executes the program or the instructions, the communication apparatus is caused to perform the method according to the first aspect.

It may be understood that, the communication apparatus according to the second aspect may be a terminal like a remote device, a chip (system) or another part or component that may be arranged in the terminal, or an apparatus including the terminal. This is not limited in this application.

In addition, for technical effects of the communication apparatus according to the second aspect, refer to the technical effects of the method according to the first aspect. Details are not described herein again.

According to a third aspect, a communication apparatus is provided. The communication apparatus includes a processor. The processor is configured to perform the method according to any one of the possible implementations of the first aspect.

In a possible design solution, the communication apparatus according to the third aspect may further include a transceiver. The transceiver may be a transceiver circuit or an interface circuit. The transceiver may be used by the communication apparatus according to the third aspect to communicate with another communication apparatus.

In a possible design solution, the communication apparatus according to the third aspect may further include a memory. The memory and the processor may be integrated together, or may be separately arranged. The memory may be configured to store a computer program and/or data in the method according to the first aspect.

In this embodiment of this application, the communication apparatus according to the third aspect may be the terminal according to the first aspect, a chip (system) or another part or component that may be arranged in the terminal, or an apparatus including the terminal.

In addition, for technical effects of the communication apparatus according to the third aspect, refer to the technical effects of the method according to any one of the implementations of the first aspect. Details are not described herein again.

According to a fourth aspect, a communication apparatus is provided. The communication apparatus includes a processor. The processor is coupled to a memory, and the processor is configured to execute a computer program stored in the memory, to cause the communication apparatus to perform the method according to any one of the possible implementations of the first aspect.

In a possible design solution, the communication apparatus according to the fourth aspect may further include a transceiver. The transceiver may be a transceiver circuit or an interface circuit. The transceiver may be used by the communication apparatus according to the fourth aspect to communicate with another communication apparatus.

In this embodiment of this application, the communication apparatus according to the fourth aspect may be the terminal according to the first aspect, a chip (system) or another part or component that may be arranged in the terminal, or an apparatus including the terminal.

In addition, for technical effects of the communication apparatus according to the fourth aspect, refer to the technical effects of the method according to any one of the implementations of the first aspect. Details are not described herein again.

According to a fifth aspect, a communication apparatus is provided. The communication apparatus includes a processor and a memory. The memory is configured to store a computer program. When the processor executes the computer program, the communication apparatus is caused to perform the method according to any one of the implementations of the first aspect.

In a possible design solution, the communication apparatus according to the fifth aspect may further include a transceiver. The transceiver may be a transceiver circuit or an interface circuit. The transceiver may be used by the communication apparatus according to the fifth aspect to communicate with another communication apparatus.

In this embodiment of this application, the communication apparatus according to the fifth aspect may be the terminal according to the first aspect, a chip (system) or another part or component that may be arranged in the terminal, or an apparatus including the terminal.

In addition, for technical effects of the communication apparatus according to the fifth aspect, refer to the technical effects of the method according to any one of the implementations of the first aspect. Details are not described herein again.

According to a sixth aspect, a communication chip is provided. The communication chip stores instructions, and when the communication chip runs on a communication device, the method according to any one of the possible implementations of the first aspect is implemented.

According to a seventh aspect, a computer-readable storage medium is provided. The computer-readable storage medium includes a computer program or instructions. The computer program or the instructions, when run on a computer, cause the computer to perform the method according to any one of the possible implementations of the first aspect.

According to an eighth aspect, a computer program product is provided. The computer program product includes a computer program or instructions. The computer program or the instructions, when run on a computer, cause the computer to perform the method according to any one of the possible implementations of the first aspect.

## BRIEF DESCRIPTION OF DRAWINGS

FIG. 1 is a first diagram of an SL slot structure according to an embodiment of this application;
FIG. 2 is a second diagram of an SL slot structure according to an embodiment of this application;
FIG. 3 is a third diagram of an SL slot structure according to an embodiment of this application;
FIG. 4 is a diagram of a slot structure of an SL SSB according to an embodiment of this application;
FIG. 5 is a diagram of an architecture of a communication system according to an embodiment of this application;
FIG. 6 is a schematic flowchart of a communication method according to an embodiment of this application;
FIG. 7 is a first diagram of positions of time domain resources according to an embodiment of this application;
FIG. 8 is a second diagram of positions of time domain resources according to an embodiment of this application;
FIG. 9 is a third diagram of positions of time domain resources according to an embodiment of this application;
FIG. 10 is a fourth diagram of positions of time domain resources according to an embodiment of this application;
FIG. 11 is a fifth diagram of positions of time domain resources according to an embodiment of this application;
FIG. 12 is a sixth diagram of positions of time domain resources according to an embodiment of this application;
FIG. 13 is a seventh diagram of positions of time domain resources according to an embodiment of this application;
FIG. 14 is an eighth diagram of positions of time domain resources according to an embodiment of this application;
FIG. 15 is a ninth diagram of positions of time domain resources according to an embodiment of this application;
FIG. 16 is a tenth diagram of positions of time domain resources according to an embodiment of this application;
FIG. 17 is an eleventh diagram of positions of time domain resources according to an embodiment of this application;
FIG. 18 is a first diagram of a structure of an AGC symbol according to an embodiment of this application;
FIG. 19 is a second diagram of a structure of an AGC symbol according to an embodiment of this application;
FIG. 20 is a first diagram of a structure of a GAP symbol according to an embodiment of this application;
FIG. 21 is a second diagram of a structure of a GAP symbol according to an embodiment of this application;
FIG. 22 is a first diagram of a structure of a communication apparatus according to an embodiment of this application; and
FIG. 23 is a second diagram of a structure of a communication apparatus according to an embodiment of this application.

## DESCRIPTION OF EMBODIMENTS

For ease of understanding, the following first describes technical terms in embodiments of this application.

1. SL slot

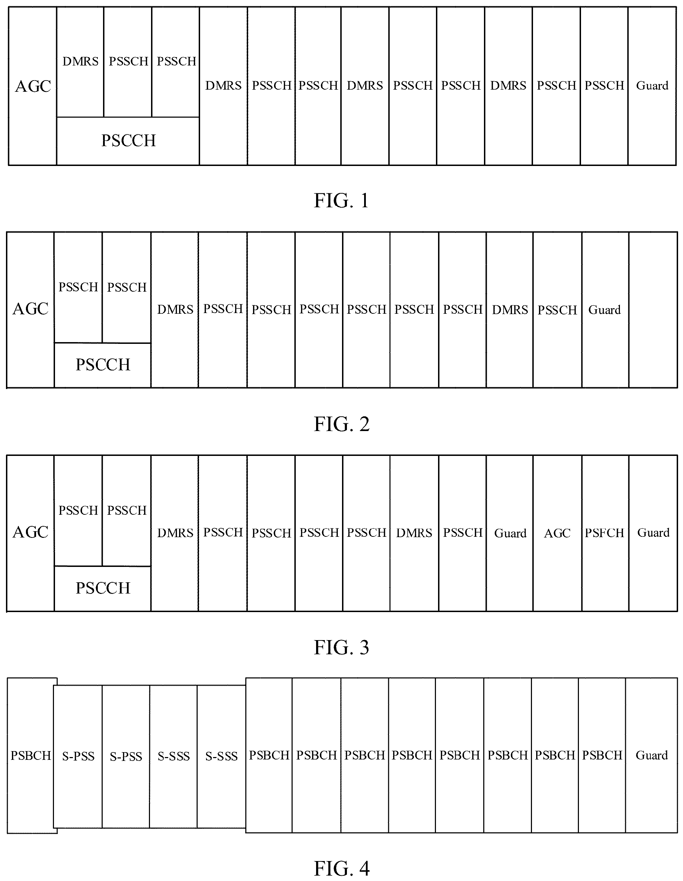

SL communication may be implemented by sending in the SL slot and receiving in the SL slot between terminals. The following describes an SL slot structure.
As shown in FIG. 1 to FIG. 3, the SL slot structure generally includes: an automatic gain control (automatic gain control, AGC) symbol, a demodulation reference signal (demodulation reference signal, DMRS) symbol, a physical sidelink shared channel (physical sidelink shared channel, PSSCH) symbol, a physical sidelink control channel (physical sidelink control channel, PSCCH) symbol, a physical sidelink feedback channel (physical sidelink feedback channel, PSFCH) symbol, and a guard (Guard) symbol. It may be understood that, the foregoing slot structure may be understood as a physical frame structure including 14 symbols (symbols).
The AGC symbol is a $1^{st}$ symbol in each SL slot, that is, a $1^{st}$ symbol in each slot. It is specified in a current protocol that, the AGC symbol is complete copying and mapping on a $2^{nd}$ symbol in the same slot. A sending apparatus sends a signal on the AGC symbol, so that the receiving apparatus can perform AGC adjustment by receiving the signal. The receiving apparatus pays attention to only signal energy received on the AGC symbol, to adjust power control of the receiving apparatus based on the signal energy, does not pay attention to specific content sent by the sending apparatus on the AGC symbol, and does not perform decoding. For a specific principle of the AGC adjustment, refer to a principle in a conventional technology. Details are not described herein again.

The DMRS symbol is for performing an operation like channel estimation by a device.

The PSSCH symbol is for carrying at least one type of information such as control information, data, or sidelink channel state information (channel state information, CSI) feedback information.

The PSCCH symbol is for carrying sidelink control information (sidelink control information, SCI).

The PSFCH symbol is for carrying sidelink feedback information. The sidelink feedback information may include hybrid automatic repeat request (hybrid automatic repeat request, HARQ) acknowledgment feedback information, such as an acknowledgment (acknowledgement, ACK) or a negative acknowledgment (negative acknowledgement, NACK). The sidelink feedback information may further include the CSI feedback information. In addition, the sidelink feedback information may further indicate at least one of the following types of information: energy saving information, resource assistance information, or the like.

The guard symbol may be set between the PSSCH symbol and the PSFCH symbol, and is used as a GP symbol. Alternatively, the guard symbol may be a last symbol in each SL slot, is used as a guard (guard period, GAP) symbol between slots, and is for transmit/receive switching of an antenna of a terminal apparatus when the guard symbol is used as the GAP symbol.

As shown in FIG. 4, a slot structure of a sidelink synchronization signal block (sidelink synchronization signal block, SL SSB) generally includes: a physical sidelink broadcast channel (physical sidelink broadcast channel, PSBCH) symbol, a physical sidelink primary synchronization signal (sidelink primary synchronization signal, S-PSS), a physical sidelink secondary synchronization signal (sidelink secondary synchronization signal, S-SSS), and a guard symbol.

The PSBCH symbol is for carrying information related to sidelink synchronization, and a service type carried by a PSBCH may include unicast, multicast, and/or broadcast communication.

The S-PSS and the S-SSS form an SL synchronization signal (sidelink synchronization signal, SLSS), and the SL synchronization signal is for performing time and frequency synchronization by the receiving device.

For descriptions of the guard symbol, refer to the foregoing related descriptions. Details are not described herein again.

It may be understood that, for specific principles of the foregoing symbols, refer to related descriptions in a protocol TS 38.211. Details are not described herein again.

2. ISAC

ISAC is a new information processing technology that implements collaboration between a sensing function and a communication function based on software and hardware resource sharing or information sharing. In addition, A spectrum, a hardware platform, a baseband waveform, and a signal processing method may be shared between communication and sensing by using ISAC, thereby improving spectral efficiency, energy efficiency, and hardware efficiency of a system, and obtaining an integration gain.

Currently, integrated sensing and communication may be implemented through an air interface. However, an existing slot structure cannot implement integrated sensing and communication. Therefore, how to implement integrated sensing and communication based on a new frame structure is a hot topic in current research.

For the foregoing technical problem, embodiments of this application provide the following technical solutions, to implement integrated sensing and communication based on a new SL slot structure.

The following describes the technical solutions of this application with reference to accompanying drawings.

The technical solutions in embodiments of this application may be applied to various communication systems, such as a wireless network (Wi-Fi) system, a vehicle-to-everything (vehicle-to-everything, V2X) communication system, a device-to-device (device-to-device, D2D) communication system, an internet of vehicles communication system, a 4th generation (4th generation, 4G) mobile communication system like a long term evolution (long term evolution, LTE) system, a worldwide interoperability for microwave access (worldwide interoperability for microwave access, WiMAX) communication system, 5th generation (5th generation, 5G) like a new radio (new radio, NR) system, and a future communication system.

All aspects, embodiments, or features are presented in this application by describing a system that may include a plurality of devices, components, modules, and the like. It should be appreciated and understood that, each system may include another device, component, module, and the like and/or may not include all devices, components, modules, and the like discussed with reference to the accompanying drawings. In addition, a combination of the solutions may be used.

In addition, in embodiments of this application, words such as "example" or "for example" are used to represent giving examples, illustrations, or descriptions. Any embodiment or design solution described as an "example" in this application should not be explained as being more preferred or having more advantages than another embodiment or design solution. Exactly, the word "example" is used to present a concept in a specific manner.

In embodiments of this application, terms "information (information)", "signal (signal)", "message (message)", "channel (channel)", and "signaling (signaling)" may be interchangeably used sometimes. It should be noted that, meanings expressed by the terms are matchable when differences of the terms are not emphasized. Terms "of (of)", "corresponding, relevant (corresponding, relevant)", and "corresponding (corresponding)" may sometimes be interchangeably used. It should be noted that, meanings expressed by the terms are matchable when differences of the terms are not emphasized. In addition, "/" mentioned in embodiments of this application may be used to represent an "or" relationship. In addition, sending to A or the like mentioned in embodiments of this application is a sending behavior in which A is used as a destination address, and may be directly or indirectly sending to A. Likewise, receiving from A or the like mentioned in embodiments of this application is a receiving behavior in which A is used as a source address, and may be directly or indirectly receiving from A.

A network architecture and a service scenario described in embodiments of this application are intended to describe the technical solutions in embodiments of this application more clearly, and do not constitute a limitation on the technical solutions provided in embodiments of this application. A person of ordinary skill in the art may learn that with the evolution of the network architecture and the emergence of new service scenarios, the technical solutions provided in embodiments of this application are also applicable to similar technical problems.

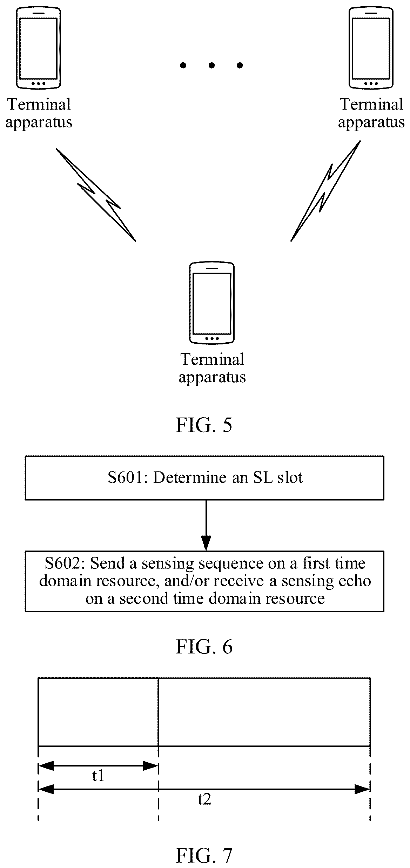

For ease of understanding of embodiments of this application, a communication system to which embodiments of this application are applicable is first described in detail by using a communication system shown in FIG. 5 as an example. For example, FIG. 5 is a diagram of an architecture of a communication system to which a communication method according to an embodiment of this application is applicable.

As shown in FIG. 5, the communication system mainly includes a plurality of terminal apparatuses. In addition, the plurality of terminal apparatuses may communicate with each other in an SL slot.

The terminal apparatus may be a terminal apparatus having a transceiver function, or may be a chip or a chip system arranged in the terminal apparatus. The terminal apparatus may also be referred to as user equipment (user equipment, UE), a vehicle, an access terminal, a subscriber unit (subscriber unit), a subscriber station, a mobile station (mobile station, MS), a mobile console, a remote station, a remote terminal, a mobile device, a user terminal, a terminal, a wireless communication device, a user agent, or a user apparatus. The terminal apparatus in this embodiment of this application may be a mobile phone (mobile phone), a cellular phone (cellular phone), a smart phone (smart phone), a tablet computer (Pad), a wireless data card, a personal digital assistant (personal digital assistant, PDA) computer, a wireless modem (modem), a handheld device (handset), a laptop computer (laptop computer), a machine type communication (machine type communication, MTC) terminal, a computer having a wireless transceiver function, a virtual reality (virtual reality, VR) terminal, an augmented reality (augmented reality, AR) terminal, a smart home device (like a refrigerator, a television, an air conditioner, or a meter), an intelligent robot, a robot arm, workshop equipment, a wireless terminal in self driving, a wireless terminal in industrial control (industrial control), the wireless terminal in self driving (self driving), a wireless terminal in remote medical (remote medical), a wireless terminal in smart grid (smart grid), a wireless terminal in transportation safety (transportation safety), a wireless terminal in a smart city (smart city), a wireless terminal in a smart home (smart home), a vehicle-mounted terminal, a road side unit (road side unit, RSU) having a terminal function, a flight device (like an intelligent robot, a hot air balloon, an uncrewed aerial vehicle, or an airplane), or the like. The terminal apparatus in this application may alternatively be a vehicle-mounted module, a vehicle-mounted assembly, a vehicle-mounted component, a vehicle-mounted chip, or a vehicle-mounted unit that is built in a vehicle as one or more parts or units. The terminal apparatus may alternatively be another apparatus having the terminal function. For example, the terminal apparatus may alternatively be an apparatus functioning as a terminal function in D2D communication.

In a communication system, the terminal apparatus may perform sensing while communicating with another terminal apparatus. For example, the terminal apparatus may perform sensing by sending a sensing sequence and/or receiving a sensing echo on a first symbol in the SL slot. In other words, the terminal apparatus may perform sensing by using a sidelink. In this way, integrated sensing and communication can be implemented based on the foregoing SL slot structure.

It should be noted that, the solutions in this embodiment of this application may also be applied to another communication system, and a corresponding name may also be replaced with a name of a corresponding function in the another communication system.

For ease of understanding, the following describes in detail the communication method provided in this embodiment of this application with reference to FIG. 6. The communication method in FIG. 6 may be performed by a terminal apparatus.

For example, FIG. 6 is a schematic flowchart of a communication method according to an embodiment of this application. The method is applicable to communication between a plurality of terminal apparatuses in the foregoing communication system.

As shown in FIG. 6, a procedure of the communication method is as follows:

S601: Determine an SL slot. S601 may be performed by the terminal apparatus.

The SL slot may be for communication between the terminal apparatuses. For an SL slot structure, refer to the foregoing related descriptions. Details are not described herein again.

The SL slot may include at least one first symbol, the first symbol is for sensing, and the first symbol may be a symbol that has an idle time domain resource in the foregoing SL slot structure. In other words, the terminal apparatus may perform sensing by using the idle time domain resource. The idle time domain resource may be an unused time domain resource, for example, a time domain resource other than a time domain resource for switching of an antenna in a GAP symbol; or may be a time domain resource that is to be used but can be used for another operation, for example, all time domain resources of an AGC symbol. It may be understood that, it is specified in a current protocol that the AGC symbol is complete copying and mapping on a 2nd symbol in the same slot. However, a receiving apparatus does not pay attention to specific content in the AGC symbol. Therefore, content sent on the AGC symbol may be changed. In other words, all the time domain resources of the AGC symbol may be used as idle time domain resource for sensing. Details are described below.

The first symbol may include at least one time domain resource (that is, used as the foregoing idle time domain resource) of a first time domain resource and a second time domain resource. In other words, the first symbol may include the first time domain resource, the second time domain resource, or the first time domain resource and the second time domain resource.

The first time domain resource is for sending a sensing sequence. The sensing sequence may be a Gold sequence, a Zadoff-chu (ZC) sequence, a pseudo-random (pseudo-random, PN) sequence, or the like. Duration of the first time domain resource is related to the antenna configured to send the sensing sequence. To be specific, when sensed signal energy is fixed, the duration of the first time domain resource may be determined based on a radio frequency indicator.

For example, start time of the first time domain resource is t11, and the duration of the first time domain resource is 1.04 microseconds ($\mu$s). The terminal apparatus may start to send the sensing sequence at the start time t11, and stop sending the sensing sequence after 1.04 $\mu$s.

It can be learned that, the first time domain resource is a part of time domain resources of the first symbol. In other words, the first time domain resource is a time domain resource whose granularity is smaller than a symbol granularity, for example, the first time domain resource includes m1 consecutive time units. For specific position distribution of the time units, refer to the following.

The second time domain resource is for receiving a sensing echo. The sensing echo is an echo reflected from an object which exists around the antenna after the antenna sends the sensing sequence and the sensing sequence encounters the object. Duration of the second time domain resource is related to a longest distance that can be sensed by the terminal apparatus. To be specific, longer duration of the second time domain resource indicates a longer distance that can be sensed by the terminal apparatus. The longest distance that can be sensed is $\frac{t2 \times c}{2}$, where $t2$ is the duration corresponding to the second time domain resource, and $c$ is a speed of light. Therefore, the duration of the second time domain resource may be set based on the longest distance that needs to be sensed by the terminal apparatus.

For example, if start time of the second time domain resource is t12, and the duration of the second time domain resource is 2 $\mu$s, the terminal apparatus may start to receive the sensing echo at the start time t12, and stop receiving the sensing echo after 2 $\mu$s.

It can be learned that, the second time domain resource is a part or all of the time domain resources of the first symbol. In other words, the second time domain resource is a time domain resource whose granularity is smaller than the symbol granularity, for example, the second time domain resource includes m2 consecutive time units. For specific position distribution of the time units, refer to the following.

It may be understood that, when performing the operation of receiving the sensing echo on the second time domain resource, the terminal apparatus may not necessarily receive the sensing echo reflected based on the sensing sequence. In other words, if the sensing sequence does not encounter an object, the corresponding sensing echo is not reflected. In this case, the terminal apparatus may not receive the sensing echo.

It may be further understood that, the sensing echo corresponding to the second time domain resource may be an echo corresponding to the sensing sequence corresponding to the first time domain resource. For example, after sending the sensing sequence, the terminal apparatus receives the sensing echo corresponding to the sensing sequence. Alternatively, the sensing echo corresponding to the second time domain resource may not be the echo corresponding to the sensing sequence corresponding to the first time domain resource. For example, the terminal apparatus receives the sensing echo corresponding to the sensing sequence after another terminal apparatus sends the sensing sequence. In this case, the sensing echo corresponding to the second time domain resource is not the echo corresponding to the sensing sequence corresponding to the first time domain resource.

When the first symbol includes the first time domain resource or the second time domain resource, the first time domain resource or the second time domain resource may be set in the idle time domain resource based on an actual situation. For example, the first time domain resource or the second time domain resource may be set in all time domain resources of the idle time domain resource, or the first time domain resource or the second time domain resource may be set in a part of time domain resources of the idle time domain resource. This is not limited in embodiments of this application.

When the first symbol includes the first time domain resource and the second time domain resource, settings of the first time domain resource and the second time domain resource in the idle time domain resource of the first symbol are related to an antenna setting of the terminal apparatus. The antenna setting of the terminal apparatus may be as follows: Different antennas respectively send the sensing sequence and receive the sensing echo; one set of antennas send the sensing sequence and receive the sensing echo; or one set of antennas send the sensing sequence and receive the sensing echo, and another at least one set of antennas are set to separately receive the sensing echo. The following respectively describes a time domain position relationship between the first time domain resource and the second time domain resource corresponding to the three different types of antenna settings.

Case 1:

When different antennas respectively send the sensing sequence and receive the sensing echo, the first symbol may include the first time domain resource and the second time domain resource. The start time of the second time domain resource is between the start time of the first time domain resource and end time of the first time domain resource. End time of the second time domain resource is greater than the end time of the first time domain resource. In other words, the first time domain resource and the second time domain resource may overlap with each other or do not overlap with each other. For descriptions of the first time domain resource and the second time domain resource, refer to the foregoing related descriptions. Details are not described herein again.

For example, as shown in FIG. 7, the start time of the second time domain resource (t2 in FIG. 7) is the start time of the first time domain resource (t1 in FIG. 7); and the end time of the second time domain resource is greater than the end time of the first time domain resource. In this case, the first time domain resource and the second time domain resource partially overlap with each other. In this way, the terminal apparatus may start to receive the sensing echo while sending the sensing sequence, so that the terminal apparatus does not have a blind range.

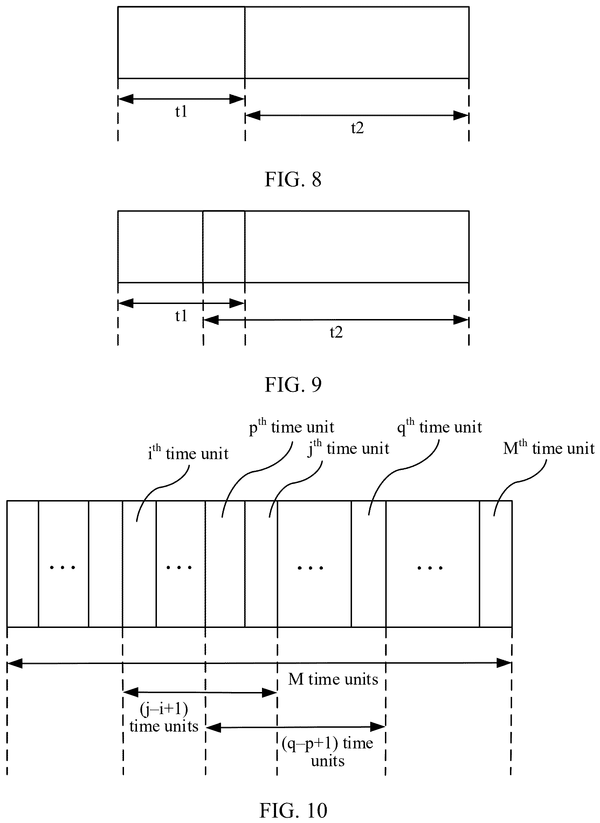

For another example, as shown in FIG. 8, the start time of the second time domain resource (t2 in FIG. 8) is the end time of the first time domain resource (t1 in FIG. 8); and the end time of the second time domain resource is greater than the end time of the first time domain resource. In this case, the first time domain resource and the second time domain resource do not overlap with each other.

For still another example, as shown in FIG. 9, the start time of the second time domain resource is (t2 in FIG. 9) in a range corresponding to the first time domain resource (t1 in FIG. 9); and the end time of the second time domain resource is greater than the end time of the first time domain resource. In this case, the first time domain resource and the second time domain resource partially overlap with each other.

It may be understood that, when the start time of the second time domain resource is the start time of the first time domain resource, the distance that can be sensed by the terminal apparatus is $\dfrac{t2 \times c}{2}$, where $t2$ is the duration corresponding to the second time domain resource, and c is the speed of light. In other words, longer duration corresponding to the second time domain resource indicates a longer distance that can be sensed by the terminal apparatus. However, the terminal apparatus may not need to sense an object that is too far away from the terminal apparatus. Therefore, a value of t2 may be set based on a distance that the terminal apparatus intends to sense.

When the start time of the second time domain resource is not the start time of the first time domain resource, that is, when the start time of the second time domain resource is the end time of the first time domain resource, or the start time of the second time domain resource is in the range corresponding to the first time domain resource, the terminal apparatus has a blind range, that is, the terminal apparatus cannot sense an object in the blind range. The distance of the blind range is $\dfrac{t \times c}{2}$, where $t$ is duration of a time period from the start time of the first time domain resource to the start time of the second time domain resource, and $c$ is the speed of light.

It may be further understood that, in this embodiment of this application, that time #1 is greater than time #2 is that the time #1 starts later than the time #2. Correspondingly, that the time #2 is less than the time #1 is that the time #2 starts earlier than the time #1. For example, if the time #1 is 14: 10, the time #2 may be 14:00.

In a possible implementation, time domain resources may be divided at a smaller granularity, and may be represented by using a time unit. The time unit is a unit in time. In other words, in this embodiment of this application, each time domain resource may also be represented by using the time unit. As shown in FIG. 10, the first symbol may include a $1^{st}$ time unit to an $M^{th}$ time unit, the first time domain resource may include an $i^{th}$ time unit to a $j^{th}$ time unit, and the second time domain resource may include a $p^{th}$ time unit to a $q^{th}$ time unit. The $p^{th}$ time unit is between the $i^{th}$ time unit and the $j^{th}$ time unit, and the $q^{th}$ time unit is between the $j^{th}$ time unit and the $M^{th}$ time unit.

A value of M is related to duration of time domain resources of the first symbol and duration of one time unit, and may be specifically set based on an actual situation.

Because the first symbol includes the first time domain resource and the second time domain resource, values of i, j, p, and q are all less than M.

For example, the first symbol includes the 1st time unit to a 10th time unit, and the first time domain resource includes the 3rd time unit to the 5th time unit. In this case, the second time domain resource may include the 3rd time unit to the 9th time unit, the 4th time unit to the 9th time unit, or the 5th time unit to the 9th time unit.

It may be understood that, the "time unit" mentioned in this embodiment of this application is merely an example of descriptions, and the "time unit" may be replaced with any possible description, for example, a "subsymbol", a "time granularity", or a "time subunit". This is not limited.

Case 2:

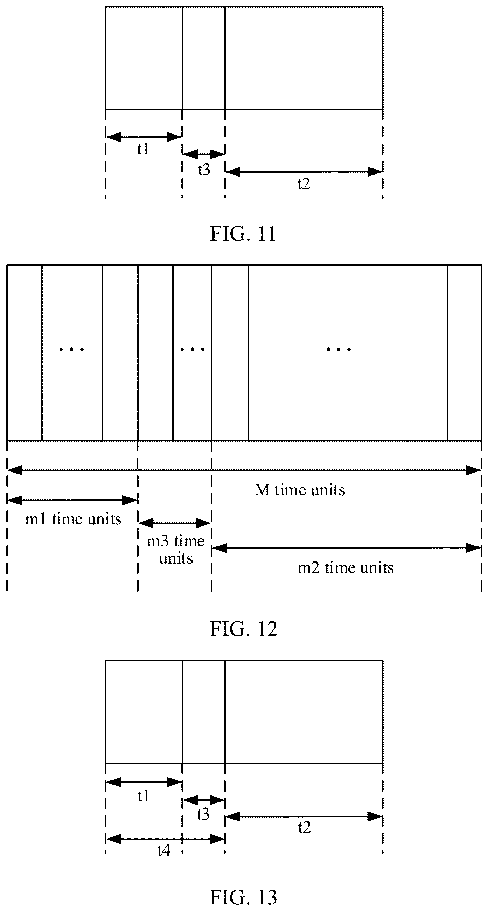

As shown in FIG. 11, in a case that one set of antennas send the sensing sequence and receive the sensing echo, the first symbol may include the first time domain resource (t1 in FIG. 11), the second time domain resource (t2 in FIG. 11), and a third time domain resource (t3 in FIG. 11). For descriptions of the first time domain resource and the second time domain resource, refer to the foregoing related descriptions. Details are not described herein again.

The third time domain resource is for switching, by the antenna of the terminal apparatus, from completing sending the sensing sequence to starting to receive the sensing echo. For the third time domain resource, refer to transmit/receive switching of the antenna (general on/off time mask). For descriptions of transmit/receive switching of the antenna, refer to related descriptions in a protocol TS 38.101. Details are not described herein again. The third time domain resource is adjacent to the first time domain resource and the second time domain resource. In other words, the third time domain resource is between the first time domain resource and the second time domain resource. In other words, in this case, the antenna can receive the sensing echo only after the antenna sends the sensing sequence. Therefore, the first time domain resource and the second time domain resource do not overlap with each other. In addition, the antenna needs specific time to perform switching from sending the sensing sequence to receiving the sensing echo, that is, the antenna cannot immediately start to receive the sensing echo at a moment at which the sending of the sensing sequence is stopped. Therefore, time, that is, the third time domain resource, for performing, by the antenna, switching from sending to receiving further needs to be set for the antenna. In this case, the first time domain resource, the second time domain resource, and the third time domain resource do not overlap with each other. Duration of the third time domain resource is related to the antenna. In other words, switching time of different antennas may be different. Therefore, the duration of the third time domain resource may be set based on an actual situation.

For example, duration of the idle time domain resource of the first symbol is 5 $\mu$s, and duration of switching of the antenna is at least 1 $\mu$s. In this case, based on the actual situation, the first time domain resource may be set to 1 $\mu$s, the second time domain resource may be set to 3 $\mu$s, and the third time domain resource may be set to 1 $\mu$s.

It may be understood that, in the foregoing case, the terminal apparatus first sends the sensing sequence, and then receives the sensing echo. In other words, the terminal apparatus cannot receive the sensing echo in time periods corresponding to the first time domain resource and the third time domain resource. Therefore, the terminal apparatus has a blind range. To be specific, the terminal apparatus cannot sense an object in the blind range, and can sense only an object outside the blind range. A distance of the blind range is $\frac{(t1+t3) \times c}{2}$, where t1 is the duration corresponding to the first time domain resource, t3 is the duration corresponding to the third time domain resource, and c is the speed of light.

In a possible implementation, each time domain resource may be represented by using a time unit. For descriptions of the time unit, refer to the foregoing related descriptions. Details are not described herein again. As shown in FIG. 12, the first symbol may include M time units, the first time domain resource may include m1 consecutive time units, the second time domain resource may include m2 consecutive time units, the third time domain resource may include m3 consecutive time units, M is an integer greater than or equal to 3, and m1, m2, and m3 are all integers greater than or equal to 1.

For descriptions of M, refer to the related descriptions in the foregoing case 1. Details are not described herein again. Values of m1, m2, and m3 are related to the first time domain resource, the second time domain resource, and the third time domain resource, and may be specifically set based on an actual situation. The first time domain resource, the second time domain resource, and the third time domain resource are set by using the idle time domain resource of the first symbol, and the idle time domain resource may be all or a part of the time domain resources of the first symbol. Therefore, a sum of m1, m2, and m3 is less than or equal to M. In addition, when m1, m2, or m3 is 1, it indicates that there is only one time unit. In this case, the one time unit is not consecutive.

For example, the first symbol may include ten time units, that is, a 1st time unit to a 10th time unit, and the idle time domain resource of the first symbol is all the time domain resources of the first symbol. In this case, the first time domain resource may include three consecutive time units, that is, the 1st time unit to the 3rd time unit; the third time domain resource may include two consecutive time units, that is, the 4th time unit and the 5th time unit; and the second time domain resource may include five time units, that is, the $6^{th}$ time unit to the $10^{th}$ time unit.

Case 3:

When one set of antennas (denoted as an antenna #1) implement sending the sensing sequence and receiving the sensing echo by the antenna, and another at least one set of antennas are set to separately receive the sensing echo, the first symbol may include the first time domain resource, the second time domain resource, a third time domain resource, and a fourth time domain resource. For descriptions of the first time domain resource, the second time domain resource, and the third time domain resource, refer to the foregoing related descriptions.

The fourth time domain resource is for receiving the sensing echo. In other words, the fourth time domain resource is a time domain resource corresponding to the at least one set of antennas. Start time of the fourth time domain resource is the same as the start time of the first time domain resource, and end time of the fourth time domain resource is between the start time of the second time domain resource and the end time of the second time domain resource. In other words, the fourth time domain resource may include the first time domain resource and the third time domain resource. In this case, the fourth time domain resource overlaps with the first time domain resource and the third time domain resource. Alternatively, the fourth time domain resource may include the first time domain resource, the third time domain resource, and at least a part of the second time domain resource. In this case, the fourth time domain resource overlaps with the first time domain resource, the third time domain resource, and the at least a part of the second time domain resource. The at least a part of the second time domain resource is a part or all of the second time domain resource.

For example, as shown in FIG. 13, the start time of the fourth time domain resource (t4 in FIG. 13) is the same as the start time of the first time domain resource (t1 in FIG. 13), and the end time of the fourth time domain resource is the same as the start time of the second time domain resource (t2 in FIG. 13). In this way, the sensing echo is received on the fourth time domain resource, to avoid a blind range.

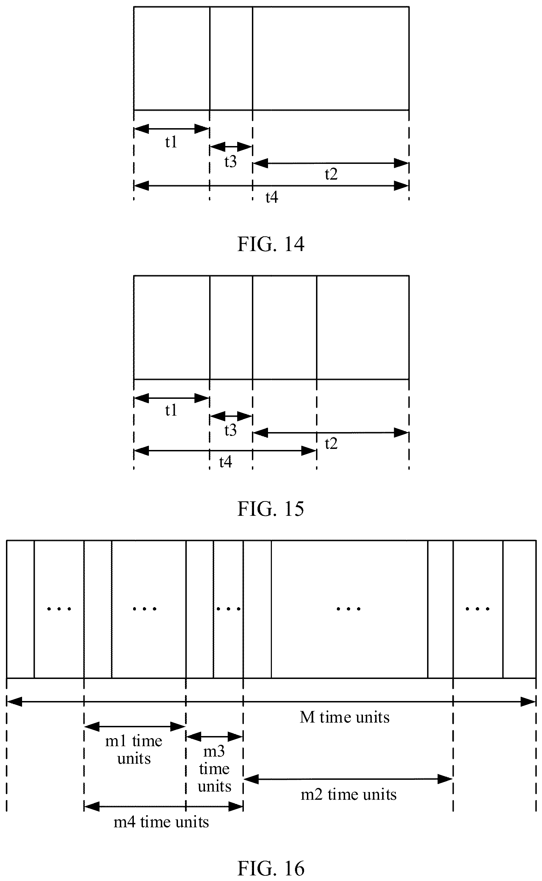

For another example, as shown in FIG. 14, the start time of the fourth time domain resource (t4 in FIG. 14) is the same as the start time of the first time domain resource (t1 in FIG. 14), and the end time of the fourth time domain resource is the same as the end time of the second time domain resource (t2 in FIG. 14).

For still another example, as shown in FIG. 15, the start time of the fourth time domain resource (t4 in FIG. 15) is the same as the start time of the first time domain resource (t1 in FIG. 15), and the end time of the fourth time domain resource is in a range corresponding to the second time domain resource (t2 in FIG. 15).

It may be understood that, the terminal apparatus may perform processing based on information related to the sensing echo received by the foregoing at least one set of antennas on the fourth time domain resource and information related to the sensing echo received by the antenna #1 on the second time domain resource, to obtain a sensing result. For a specific principle of the processing, refer to the principle in the conventional technology. Details are not described herein again.

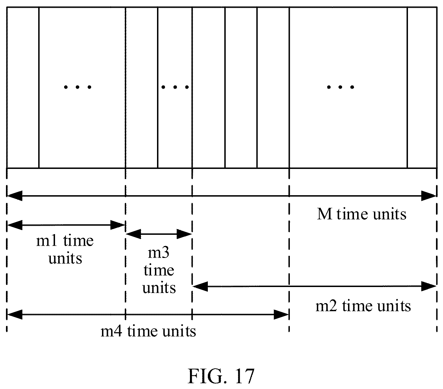

In a possible implementation, each time domain resource may be represented by using a time unit. For descriptions of the time unit, refer to the foregoing related descriptions. Details are not described herein again. Specifically, as shown in FIG. 16 and FIG. 17, the first symbol may include M time units; the first time domain resource may include m1 consecutive time units; the second time domain resource may include m2 consecutive time units; the third time domain resource may include m3 consecutive time units; the fourth time domain resource may include the m1 consecutive time units and the m3 consecutive time units, or the fourth time domain resource may include the m1 consecutive time units, the m3 consecutive time units, and at least a part of the m2 consecutive time units; and M is an integer greater than or equal to 3, and m1, m2, and m3 are all integers greater than or equal to 1.

For descriptions of M, m1, m2, and m3, refer to the foregoing related descriptions. Details are not described herein again. Because m4 may include the m1 consecutive time units and the m3 consecutive time units, or the m1 consecutive time units, the m3 consecutive time units, and the at least a part of the m2 consecutive time units, a value of m4 is less than or equal to M.

For example, the first symbol includes 12 time units, that is, a $1^{st}$ time unit to a $12^{th}$ time unit; the first time domain resource includes three time units, that is, the $2^{nd}$ time unit to the $4^{th}$ time unit; the third time domain resource includes one time unit, that is, the $5^{th}$ time unit; and the second time domain resource includes five time units, that is, the $6^{th}$ time unit to the $10^{th}$ time unit. In this case, the fourth time domain resource may include four time units, that is, the $2^{nd}$ time unit to the $5^{th}$ time unit; include six time units, that is, the $2^{nd}$ time unit to the $7^{th}$ time unit; or include nine time units, that is, the $2^{nd}$ time unit to the $10^{th}$ time unit.

It may be understood that, when the m2 consecutive time units are one time unit, the at least a part of the m2 consecutive time units is the one time unit.

It may be further understood that, the foregoing describes the time domain position relationship between the time domain resources by using the case 1 to the case 3. For ease of understanding, the following describes a time domain position relationship between the time domain resources and a symbol.

The first time domain resource and the second time domain resource may use all or a part of the time domain resources in the idle time domain resource of the first symbol. The idle time domain resource of the first symbol may be all or a part of the time domain resources of the first symbol. In other words, the first time domain resource and the second time domain resource may use all or a part of the time domain resources of the first symbol, that is, a time domain resource for sensing may be all or a part of the time domain resources of the first symbol. Therefore, the start time of the first time domain resource and the end time of the second time domain resource are set, to determine the time domain resource for sensing in the first symbol. The following describes a relationship between the start time of the first time domain resource, the end time of the second time domain resource, and the first symbol.

In a possible design solution, the start time of the first time domain resource is greater than or equal to start time of the first symbol. When a part or all of the time domain resources of the first symbol starting from the start time of the first symbol are idle, the start time of the first time domain resource may be greater than or equal to the start time of the first symbol. When a part of the time domain resources of the first symbol starting from the start time of the first symbol is used, the start time of the first time domain resource is greater than the start time of the first symbol.

For example, if the idle time domain resource of the first symbol is all the time domain resources of the first symbol, the start time of the first symbol is t13, and duration of the first symbol is 10 μs, the start time of the first time domain resource may be t13, or may be a moment within 10 μs after the start time of the first symbol.

In a possible implementation, the end time of the second time domain resource is less than or equal to end time of the first symbol. When a part or all of the time domain resources of the first symbol before the end time of the first symbol are idle, the end time of the second time domain resource may be less than or equal to the end time of the first symbol. When a part of the time domain resources of the first symbol before the end time of the first symbol is used, the end time of the second time domain resource is less than the end time of the first symbol.

In the foregoing possible implementation, the first symbol may be the AGC symbol. Because all the time domain resources of the AGC symbol are available, sensing may be performed by using all or a part of the time domain resources of the AGC symbol. Duration corresponding to all the time domain resources of the AGC symbol is related to a subcarrier spacing (subcarrier spacing, SCS), that is, a length of the AGC symbol may be determined based on the SCS. For descriptions of the AGC symbol, refer to the foregoing related descriptions. Details are not described herein again.

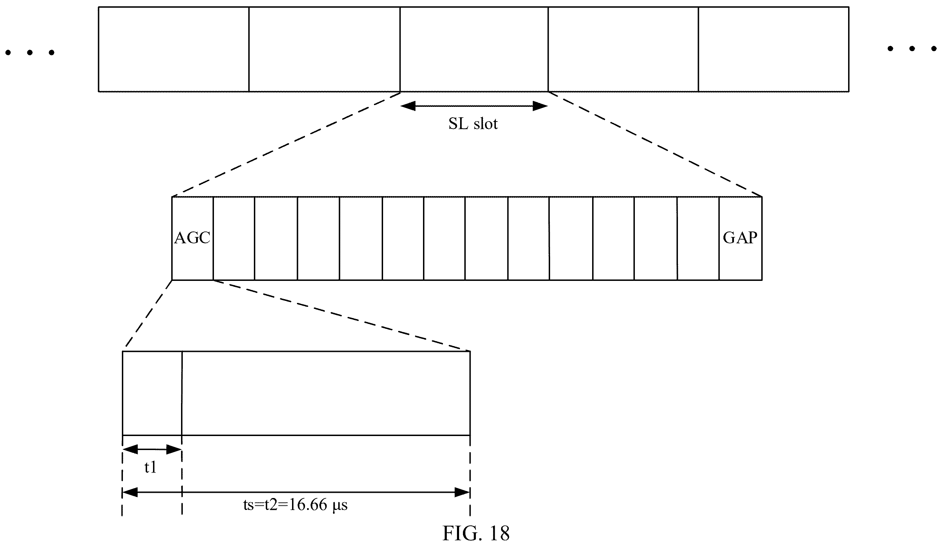

For example, as shown in FIG. 18, the AGC symbol includes the first time domain resource and the second time domain resource, and all the time domain resources of the AGC symbol are for sensing. When the SCS is 60 kHz, according to a specification of a protocol, a length of each symbol is 16.66 μs, that is, the length of the AGC symbol (ts in FIG. 18) is 16.66 μs. In this case, maximum duration of the second time domain resource (t2 in FIG. 18) may be 16.66 μs. The duration of the first time domain resource (t1 in FIG. 18) is related to a radio frequency indicator of the antenna, and may be set based on an actual situation.

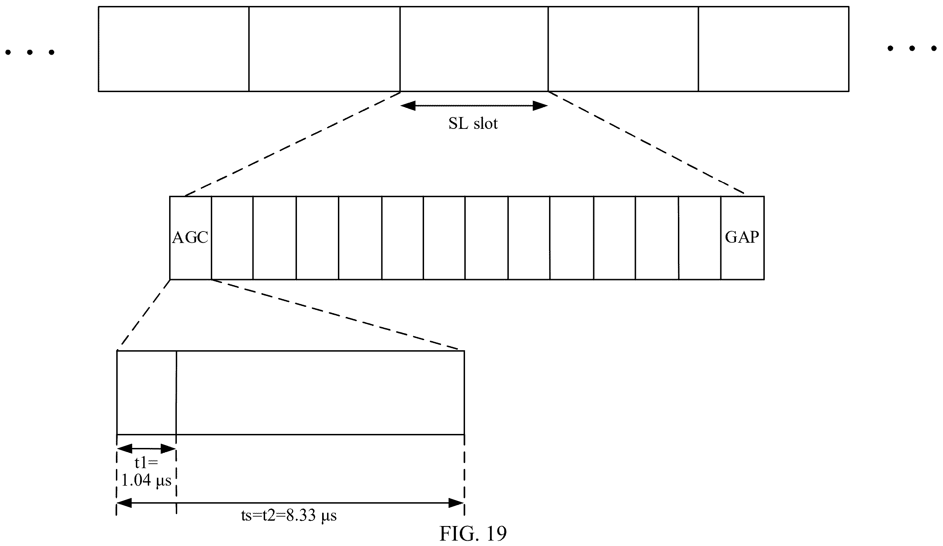

For still another example, as shown in FIG. 19, the AGC symbol includes the first time domain resource and the second time domain resource, and all the time domain resources of the AGC symbol are for sensing. When the SCS is 120 kHz, according to the specification of the protocol, the length of each symbol is 8.33 μs, that is, the length of the AGC symbol (ts in FIG. 19) is 8.33 μs. In this case, the maximum duration of the second time domain resource (t2 in FIG. 19) may be 8.33 μs. The duration of the first time domain resource (t1 in FIG. 19) is related to the radio frequency indicator of the antenna, and may be set based on an actual situation. For example, when the SCS is 960 kHz, the existing protocol supports scheduling a time domain pulse or time domain resource at a granularity of 1.04 μs, that is, the duration of the first time domain resource may be 1.04 μs.

It may be understood that, the AGC symbol may have different types of time domain position settings of the first time domain resource and the second time domain resource. For details, refer to the foregoing related descriptions. The foregoing content is merely an example, and is not limited.

In another possible implementation, the first symbol may further include a fifth time domain resource. The fifth time domain resource is for switching from completing receiving the sensing echo to starting to send or receive a second symbol. In other words, the fifth time domain resource may be for transmit/receive switching of the antenna of the terminal apparatus. Start time of the fifth time domain resource may be the same as the end time of the second time domain resource, and end time of the fifth time domain resource may be the same as the end time of the first symbol. The second symbol is adjacent to the first symbol. In other words, the first symbol may be a last symbol in the SL slot, and the second symbol may be a 1st symbol in a next slot adjacent to the SL slot.

In the foregoing possible implementation, the first symbol may be the GAP symbol. The GAP symbol is the last symbol in the SL slot, and is for transmit/receive switching of the antenna. Therefore, a part of the time domain resources of the GAP symbol before end time of the GAP symbol needs to be for transmit/receive switching of the antenna, and is the foregoing fifth time domain resource. In addition, other time domain resources other than the fifth time domain resource in the GAP symbol may be for sensing. Duration corresponding to all the time domain resources of the GAP symbol is related to an SCS, that is, a length of the GAP symbol may be determined based on the SCS. For descriptions of the GAP symbol, refer to the foregoing related descriptions. Details are not described herein again.

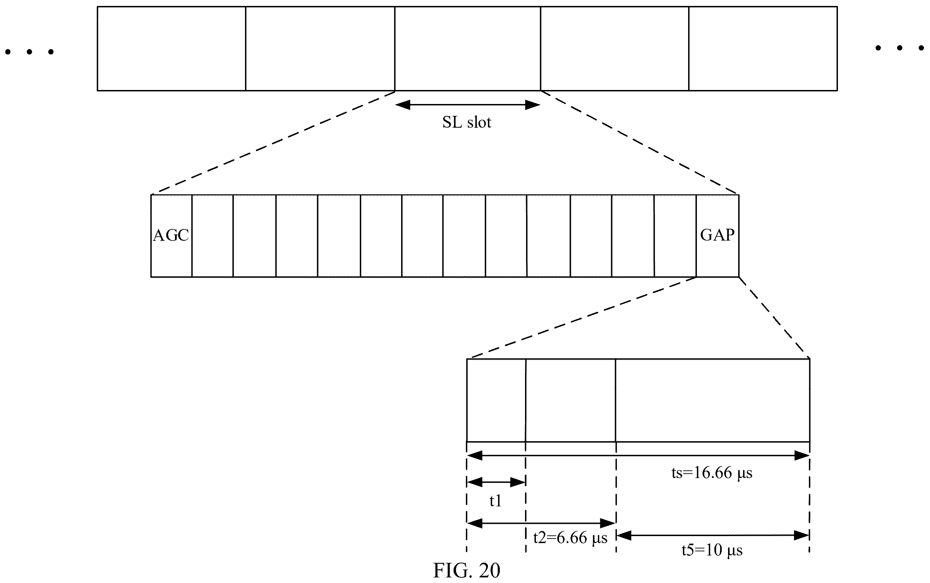

For example, as shown in FIG. 20, the GAP symbol includes the first time domain resource, the second time domain resource, and the fifth time domain resource, and the other time domain resources other than the fifth time domain resource in the GAP symbol are all for sensing. When the SCS is 60 kHz, according to a specification of a protocol, a length of each symbol is 16.66 μs, that is, the length of the GAP symbol (ts in FIG. 20) is 16.66 μs. In addition, it is specified in the protocol that duration for switching of the antenna is at least 10 μs, that is, the fifth time domain resource (t5 in FIG. 20) is greater than or equal to 10 μs. In this case, maximum duration of the second time domain resource (t2 in FIG. 20) may be 6.66 μs. The duration of the first time domain resource (t1 in FIG. 20) is related to a radio frequency indicator of the antenna, and may be set based on an actual situation.

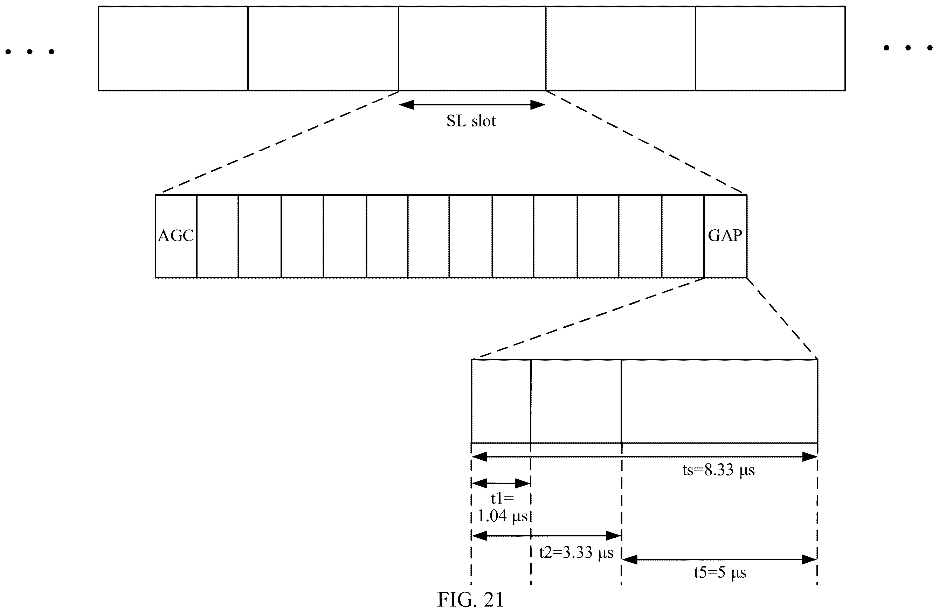

For still another example, as shown in FIG. 21, the GAP symbol includes the first time domain resource, the second time domain resource, and the fifth time domain resource, and the other time domain resources other than the fifth time domain resource in the GAP symbol are all for sensing. When the SCS is 120 kHz, according to the specification of the protocol, the length of each symbol is 8.33 μs, that is, the length of the GAP symbol (ts in FIG. 21) is 8.33 μs. In addition, it is specified in the protocol that the duration for switching of the antenna is at least 5 μs, that is, the fifth time domain resource (t5 in FIG. 21) is greater than or equal to 5 μs. In this case, the maximum duration of the second time domain resource (t2 in FIG. 21) may be 3.33 μs. The duration of the first time domain resource (t1 in FIG. 21) is related to the radio frequency indicator of the antenna, and may be set based on an actual situation. For example, when the SCS is 960 kHz, the existing protocol supports scheduling a time domain pulse or time domain resource at a granularity of 1.04 μs, that is, the duration of the first time domain resource may be 1.04 μs.

It may be understood that, the GAP symbol may have different types of position settings of the first time domain resource and the second time domain resource. For details, refer to the foregoing related descriptions. The foregoing content is merely an example, and is not limited.

It may be further understood that, parameters of the protocol in the foregoing examples may be correspondingly changed based on a change of the protocol. This is not limited in this application. In addition, when the existing SL slot includes the AGC symbol and the GAP symbol, the AGC symbol and/or the GAP symbol in the SL slot may be selected as the first symbol based on an actual situation. In addition, to ensure a good sensing effect, same symbols may be selected from a plurality of adjacent SL slots as first symbols, so that duration between the first symbols is the same, that is, sensing may be periodically performed. For example, an AGC symbol in each SL slot in the plurality of adjacent SL slots is set as the first symbol, or a GAP symbol in each SL slot of the plurality of adjacent SL slots is set as the first symbol.

The terminal apparatus may determine the SL slot based on a specific sensed situation. In addition, after the SL slot is determined, S602 may continue to be performed.

S602: Send the sensing sequence on the first time domain resource, and/or receive the sensing echo on the second time domain resource. S602 may be performed by the terminal apparatus.

In other words, the terminal apparatus performs sensing in three manners: sending the sensing sequence on the first time domain resource and receiving the sensing echo on the second time domain resource; sending the sensing sequence on the first time domain resource; or receiving the sensing echo on the second time domain resource. Descriptions are separately provided below.

Manner 1: The terminal apparatus sends the sensing sequence on the first time domain resource, and receives the sensing echo on the second time domain resource.

In this manner, the terminal apparatus sends the sensing sequence, and receives the sensing echo corresponding to the sensing sequence. A sensing target may be identified based on information such as time at which the sensing sequence is sent and time at which the sensing echo is received. For a specific principle of determining the sensing target based on the information, refer to the principle in the conventional technology. Details are not described herein again.

For the time domain position setting of the first time domain resource and the second time domain resource in the first symbol in the SL slot, refer to the foregoing related descriptions. Details are not described herein again.

Manner 2: The terminal apparatus sends the sensing sequence on the first time domain resource.

In this manner, the terminal apparatus sends the sensing sequence, another terminal apparatus may receive the sensing echo corresponding to the sensing sequence, and the another terminal apparatus identifies a sensing target.

The terminal apparatus may send, to the another terminal apparatus, information such as a time point at which the sensing sequence is sent and an identifier of the sensing sequence. After receiving the sensing echo, the another terminal apparatus may identify the sensing target based on the information received from the terminal apparatus and information related to the received sensing echo. In addition, after identifying the sensing target, the another terminal apparatus sends information related to the sensing target to the terminal apparatus. For a specific principle of determining the sensing target based on the information, refer to the principle in the conventional technology. Details are not described herein again.

For example, a terminal apparatus #1 sends a sensing sequence, and sends, to a terminal apparatus #2, information such as a time point at which the sensing sequence is sent and the identifier of the sensing sequence. After the sensing sequence encounters an object #1, a corresponding sensing echo is reflected. After receiving the sensing echo, the terminal apparatus #2 identifies a sensing target with reference to the information sent by the terminal apparatus #1. In addition, the terminal apparatus #2 sends information related to the sensing target to the terminal apparatus #1.

It may be understood that, the another terminal apparatus may be one terminal apparatus, or may be a plurality of terminal apparatuses. This is not limited in embodiments of this application. When the plurality of other terminal apparatuses are provided, each terminal apparatus in the other terminal apparatuses may receive the sensing echo, and identify the sensing target based on the information received from the terminal apparatus and the information related to the received sensing echo.

It may be further understood that, in the manner 2, the first symbol in the SL slot may include the first time domain resource. Alternatively, the first symbol may include the first time domain resource and the second time domain resource. However, in this case, the terminal apparatus does not receive the sensing echo on the second time domain resource.

Manner 3: The terminal apparatus receives the sensing echo on the second time domain resource.

In this manner, the terminal apparatus may receive a sensing echo corresponding to a sensing sequence sent by another terminal apparatus, and identify a sensing target based on the sensing echo.

The terminal apparatus receives information sent by the another terminal apparatus, such as a time point at which the another terminal apparatus sends the sensing sequence, and an identifier of the sensing sequence. After receiving the sensing echo corresponding to the sensing sequence, the terminal apparatus may identify the sensing target based on the information received from the another terminal apparatus and information related to the received sensing echo. In addition, after identifying the sensing target, the terminal apparatus may send information related to the sensing target to the another terminal apparatus. For a specific principle of determining the sensing target based on the information, refer to the principle in the conventional technology. Details are not described herein again.

For example, a terminal apparatus #1 receives information sent by a terminal apparatus #2, such as a time point at which the terminal apparatus #2 sends a sensing sequence, and an identifier of the sensing sequence. After receiving the sensing echo corresponding to the sensing sequence, the terminal apparatus #1 identifies a sensing target based on the information sent by the terminal apparatus #2 and information related to the received sensing echo. In addition, the terminal apparatus #1 sends information related to the sensing target to the terminal apparatus #2.

It may be understood that, the another terminal apparatus in this manner may be one terminal apparatus, or may be a plurality of terminal apparatuses. This is not limited in embodiments of this application. When the plurality of other terminal apparatuses are provided, the terminal apparatus may receive information such as a time point at which each terminal apparatus in the plurality of other terminal apparatuses sends the sensing sequence, and the identifier of the sensing sequence. Correspondingly, the terminal apparatus may receive sensing echoes corresponding to the plurality of different sensing sequences. In other words, the terminal apparatus may identify a plurality of sensing targets based on different sensing echoes.

It may be further understood that, in the manner 3, the first symbol in the SL slot may include the second time domain resource. Alternatively, the first symbol may include the first time domain resource and the second time domain resource. However, in this case, the terminal apparatus does not send the sensing sequence on the first time domain resource.

In this embodiment of this application, the terminal apparatus may perform sensing while communicating with another terminal apparatus. In other words, the terminal apparatus may perform sensing by using a sidelink, to replace a part of external sensing devices, thereby reducing power consumption and sensing costs in a case that a vehicle has a high sensing capability.

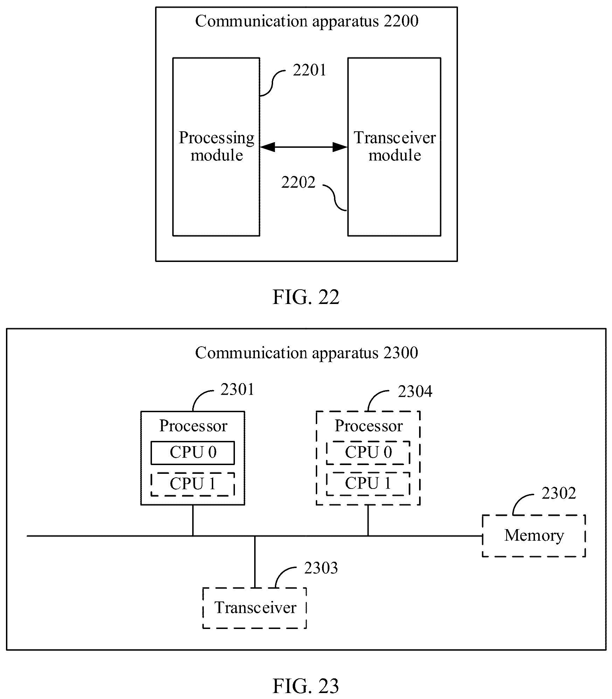

The foregoing describes in detail the communication method provided in this embodiment of this application with reference to FIG. 6 to FIG. 21. The following describes in detail, with reference to FIG. 22 and FIG. 23, a communication apparatus configured to perform the communication method provided in this embodiment of this application.

FIG. 22 is a first diagram of a structure of a communication apparatus according to an embodiment of this application. For example, as shown in FIG. 22, a communication apparatus 2200 includes a processing module 2201 and a transceiver module 2202. For ease of description, FIG. 22 shows only main parts of the communication apparatus.

In some embodiments, the communication apparatus 2200 is applicable to the communication system shown in FIG. 5, and performs functions of the terminal apparatus in the method shown in FIG. 6.

For example, the processing module 2201 is configured to determine a sidelink SL slot; and the transceiver module 2202 is configured to send a sensing sequence on a first time domain resource, and/or receive a sensing echo on a second time domain resource. The SL slot includes at least one first symbol, the first symbol includes at least one time domain resource of the first time domain resource and the second time domain resource, the first time domain resource is for sending the sensing sequence, and the second time domain resource is for receiving the sensing echo.

In a possible design solution, the first symbol further includes a third time domain resource, the third time domain resource is for switching from completing sending the sensing sequence to starting to receive the sensing echo, and the third time domain resource is adjacent to the first time domain resource and the second time domain resource.

Optionally, the first symbol includes M time units, the first time domain resource includes m1 consecutive time units, the second time domain resource includes m2 consecutive time units, the third time domain resource includes m3 consecutive time units, M is an integer greater than or equal to 3, and m1, m2, and m3 are all integers greater than or equal to 1.

Optionally, the first symbol further includes a fourth time domain resource, the fourth time domain resource is for receiving the sensing echo, start time of the fourth time domain resource is the same as start time of the first time domain resource, and end time of the fourth time domain resource is between start time of the second time domain resource and end time of the second time domain resource.

Further, the first symbol includes M time units; the first time domain resource includes m1 consecutive time units; the second time domain resource includes m2 consecutive time units; the third time domain resource includes m3 consecutive time units; the fourth domain resource includes the m1 consecutive time units and the m3 consecutive time units, or the fourth time domain resource includes the m1 consecutive time units, the m3 consecutive time units, and at least a part of the m2 consecutive time units; and M is an integer greater than or equal to 3, and m1, m2, and m3 are all integers greater than or equal to 1.

In a possible design solution, the start time of the second time domain resource is between the start time of the first time domain resource and the end time of the first time domain resource, and the end time of the second time domain resource is greater than the end time of the first time domain resource.

Optionally, the first symbol includes a $1^{st}$ time unit to an $M^{th}$ time unit, the first time domain resource includes an $i^{th}$ time unit to a $j^{th}$ time unit, the second time domain resource includes a $p^{th}$ time unit to a $q^{th}$ time unit, the $p^{th}$ time unit is between the $i^{th}$ time unit and the $j^{th}$ time unit, and the $q^{th}$ time unit is between the $j^{th}$ time unit and the $M^{th}$ time unit.

In a possible design solution, the start time of the first time domain resource is greater than or equal to start time of the first symbol.

Optionally, the end time of the second time domain resource is less than or equal to end time of the first symbol.

Further, the first symbol is an automatic gain control AGC symbol.

Optionally, the first symbol further includes a fifth time domain resource, the fifth time domain resource is for switching from completing receiving the sensing echo to starting to send or receive a second symbol, and the second symbol is adjacent to the first symbol; and start time of the fifth time domain resource is the same as the end time of the second time domain resource.

Further, the first symbol is a guard period GAP symbol.

In a possible design solution, the sensing echo is an echo corresponding to the sensing sequence.

Optionally, the transceiver module 2202 may include a sending module (not shown in FIG. 22) and a receiving module (not shown in FIG. 22). The sending module is configured to implement a sending function of the communication apparatus 2200, and the receiving module is configured to implement a receiving function of the communication apparatus 2200.

Optionally, the communication apparatus 2200 may further include a storage module (not shown in FIG. 22), and the storage module stores a program or instructions. When the processing module 2201 executes the program or the instructions, the communication apparatus 2200 is caused to perform the functions of a remote UE or a remote device in the foregoing method shown in FIG. 6.

It may be understood that, the communication apparatus 2200 may be a terminal, for example, the remote UE or the remote device, a chip (system) or another part or component that may be arranged in the terminal, or an apparatus including the terminal. This is not limited in this application.

In addition, for technical effects of the communication apparatus 2200, refer to the technical effects of the communication method shown in FIG. 6. Details are not described herein again.

FIG. 23 is a second diagram of a structure of a communication apparatus according to an embodiment of this application. For example, the communication apparatus may be a terminal, or a chip (system) or another part or component that may be arranged in the terminal. As shown in FIG. 23, a communication apparatus 2300 may include a processor 2301. Optionally, the communication apparatus 2300 may further include a memory 2302 and/or a transceiver 2303. The processor 2301 is coupled to the memory 2302 and the transceiver 2303, for example, may be connected to the memory 2302 and the transceiver 2303 through a communication bus.

The following describes each part of the communication apparatus 2300 in detail with reference to FIG. 23.

The processor 2301 is a control center of the communication apparatus 2300. The processor 2301 may be one processor, or may be a general term of a plurality of processing elements. For example, the processor 2301 is one or more central processing units (central processing units, CPUs), may be an application-specific integrated circuit (application-specific integrated circuit, ASIC), or is configured as one or more integrated circuits configured to implement embodiments of this application, for example, one or more microprocessors (digital signal processors, DSPs), or one or more field programmable gate arrays (field programmable gate arrays, FPGAs).

Optionally, the processor 2301 may perform various functions of the communication apparatus 2300 by running or executing a software program stored in the memory 2302 and invoking data stored in the memory 2302, for example, perform the foregoing communication method.

During specific implementation, in an embodiment, the processor 2301 may include one or more CPUs, for example, a CPU 0 and a CPU 1 shown in FIG. 23.

During specific implementation, in an embodiment, the communication apparatus 2300 may alternatively include a plurality of processors, for example, the processor 2301 and a processor 2304 shown in FIG. 23. Each of the processors may be a single-core processor (single-CPU), or may be a multi-core processor (multi-CPU). The processor herein may be one or more devices, circuits and/or processing cores configured to process data (for example, computer program instructions).

The memory 2302 is configured to store a software program for performing the solutions in this application, and the processor 2301 controls execution of the software program. For a specific implementation, refer to the foregoing method embodiment. Details are not described herein again.

Optionally, the memory 2302 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or any other medium that can be used to carry or store expected program code in a form of an instruction or a data structure and that can be accessed by a computer, but is not limited thereto. The memory 2302 may be integrated with the processor 2301, or may exist independently, and is coupled to the processor 2301 through an interface circuit (not shown in FIG. 23) of the communication apparatus 2300. This is not specifically limited in embodiments of this application.

The transceiver 2303 is configured to communicate with another communication apparatus. For example, the communication apparatus 2300 is a terminal, and the transceiver 2303 may be configured to communicate with a network device or communicate with another terminal apparatus. For still another example, the communication apparatus 2300 is a network device, and the transceiver 2303 may be configured to communicate with the terminal or communicate with another network device.

Optionally, the transceiver 2303 may include a receiver and a transmitter (not separately shown in FIG. 23). The receiver is configured to implement a receiving function, and the transmitter is configured to implement a sending function.

Optionally, the transceiver 2303 may be integrated with the processor 2301, or may exist independently, and is coupled to the processor 2301 through the interface circuit (not shown in FIG. 23) of the communication apparatus 2300. This is not specifically limited in embodiments of this application.

It may be understood that, a structure of the communication apparatus 2300 shown in FIG. 23 does not constitute a limitation on the communication apparatus. An actual communication apparatus may include more or fewer parts than those shown in the figure, or combine some parts, or have different part arrangement.

In addition, for technical effects of the communication apparatus 2300, refer to the technical effects of the method in the foregoing method embodiment. Details are not described herein again.

It should be understood that, the processor in embodiments of this application may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It may be further understood that, the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and is used as an external cache. By way of example rather than a limitative description, random access memories (random access memories, RAMs) in many forms may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All of or a part of the foregoing embodiments may be implemented by using software, hardware (for example, a circuit), firmware, or any combination thereof. When embodiments are implemented by using software, a part or all of the foregoing embodiments may be implemented in a form of a computer program product. The computer program product includes one or more computer instructions or computer programs. When the computer instructions or the computer programs are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from one computer-readable storage medium to another computer-readable storage medium. For example, the computer instructions may be transmitted from a website, computer, server, or data center to another website, computer, server, or data center in a wired (for example, infrared, radio, and microwave, or the like) manner. The computer-readable storage medium may be any usable medium accessible by a computer, or a data storage device, like a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

An embodiment of this application further provides a communication chip, where the communication chip stores instructions, and when the communication chip runs on a communication device, the method provided in embodiments of this application is implemented.

It should be understood that, the term "and/or" in this specification describes only an association relationship between associated objects and represents that three relationships may exist. For example, A and/or B may represent the following three cases: only A exists, both A and B exist, and only B exists. A and B may be singular or plural. In addition, the character "/" in this specification usually indicates an "or" relationship between the associated objects, but may also indicate an "and/or" relationship. For details, refer to the context for understanding.

In this application, "at least one" means one or more, and "plurality of" means two or more. "At least one of the following items (pieces)" or a similar expression thereof means any combination of the items, including any combination of single items (pieces) or plural items (pieces). For example, at least one of a, b, or c may indicate: a, b, c, a-b, a-c, b-c, or a-b-c, where a, b, and c may be singular or plural.

It should be understood that, sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiment. Details are not described herein again.

In the several embodiments provided in this application, it should be understood that, the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separated, and parts displayed as units may or may not be physical units, may be located in one position, or may be distributed on a plurality of network units. A part or all of the units may be selected based on an actual requirement to achieve the objectives of the solutions of embodiments.

In addition, functional units in embodiments of this application may be integrated into one processing unit, or each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the current technology, or a part of the technical solutions may be implemented in a form of a software product. The computer software product is stored in a storage medium, and includes several instructions for causing a computer device (which may be a personal computer, a server, or a network device) to perform all or a part of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A communication method, wherein the method comprises:

   determining a sidelink SL slot, wherein the SL slot comprises at least one first symbol, the first symbol comprises at least one time domain resource of a first time domain resource and a second time domain resource, the first time domain resource is for sending a sensing sequence, and the second time domain resource is for receiving a sensing echo; and
   sending the sensing sequence on the first time domain resource, and/or receiving the sensing echo on the second time domain resource.

2. The method according to claim 1, wherein the first symbol further comprises a third time domain resource, the third time domain resource is for switching from completing sending the sensing sequence to starting to receive the sensing echo, and the third time domain resource is adjacent to the first time domain resource and the second time domain resource.

3. The method according to claim 2, wherein the first symbol comprises M time units, the first time domain resource comprises m1 consecutive time units, the second time domain resource comprises m2 consecutive time units, the third time domain resource comprises m3 consecutive time units, M is an integer greater than or equal to 3, and m1, m2, and m3 are all integers greater than or equal to 1.

4. The method according to claim 2, wherein the first symbol further comprises a fourth time domain resource, the fourth time domain resource is for receiving the sensing echo, start time of the fourth time domain resource is the same as start time of the first time domain resource, and end time of the fourth time domain resource is between start time of the second time domain resource and end time of the second time domain resource.

5. The method according to claim 4, wherein the first symbol comprises M time units; the first time domain resource comprises m1 consecutive time units; the second time domain resource comprises m2 consecutive time units; the third time domain resource comprises m3 consecutive time units; the fourth time domain resource comprises the m1 consecutive time units and the m3 consecutive time units, or the fourth time domain resource comprises the m1 consecutive time units, the m3 consecutive time units, and at least a part of the m2 consecutive time units; and M is an integer greater than or equal to 3, and m1, m2, and m3 are all integers greater than or equal to 1.

6. The method according to claim 1, wherein start time of the second time domain resource is between start time of the first time domain resource and end time of the first time domain resource, and end time of the second time domain resource is greater than the end time of the first time domain resource.

7. The method according to claim 6, wherein the first symbol comprises a $1^{st}$ time unit to an $M^{th}$ time unit, the first time domain resource comprises an $i^{th}$ time unit to a $j^{th}$ time unit, the second time domain resource comprises a $p^{th}$ time unit to a $q^{th}$ time unit, the $p^{th}$ time unit is between the $i^{th}$ time unit and the $j^{th}$ time unit, and the $q^{th}$ time unit is between the $j^{th}$ time unit and the $M^{th}$ time unit.

8. The method according to any one of claims 1 to 7, wherein the start time of the first time domain resource is greater than or equal to start time of the first symbol.

9. The method according to claim 8, wherein the end time of the second time domain resource is less than or equal to end time of the first symbol.

10. The method according to claim 9, wherein the first symbol is an automatic gain control AGC symbol.

11. The method according to claim 8, wherein the first symbol further comprises a fifth time domain resource, the fifth time domain resource is for switching from completing receiving the sensing echo to starting to send or receive a second symbol, and the second symbol is adjacent to the first symbol; and start time of the fifth time domain resource is the same as the end time of the second time domain resource.

12. The method according to claim 11, wherein the first symbol is a guard period GAP symbol.

13. The method according to any one of claims 1 to 12, wherein the sensing echo is an echo corresponding to the sensing sequence.

14. A communication apparatus, wherein the apparatus comprises:

   a processing module, configured to determine a sidelink SL slot, wherein the SL slot comprises at least one first symbol, the first symbol comprises at least one time domain resource of a first time domain resource and a second time domain resource, the first time domain resource is for sending a sensing sequence, and the second time domain resource is for receiving a sensing echo; and
   a transceiver module, configured to send the sensing sequence on the first time domain resource, and/or receive the sensing echo on the second time domain resource.

15. The apparatus according to claim 14, wherein the first symbol further comprises a third time domain resource, the third time domain resource is for switching from completing sending the sensing sequence to starting to receive the sensing echo, and the third time domain resource is adjacent to the first time domain resource and the second time domain resource.

16. The apparatus according to claim 15, wherein the first symbol comprises M time units, the first time domain resource comprises m1 consecutive time units, the second time domain resource comprises m2 consecutive time units, the third time domain resource comprises m3 consecutive time units, M is an integer greater than or equal to 3, and m1, m2, and m3 are all integers greater than or equal to 1.

17. The apparatus according to claim 15, wherein the first symbol further comprises a fourth time domain resource, the fourth time domain resource is for receiving the sensing echo, start time of the fourth time domain resource is the same as start time of the first time domain resource, and end time of the fourth time domain resource is between start time of the second time domain resource and end time of the second time domain resource.

18. The apparatus according to claim 17, wherein the first symbol comprises M time units, the first time domain resource comprises m1 consecutive time units; the second time domain resource comprises m2 consecutive time units; the third time domain resource comprises m3 consecutive time units; the fourth time domain resource comprises the m1 consecutive time units and the m3 consecutive time units, or the fourth time domain resource comprises the m1 consecutive time units, the m3 consecutive time units, and at least a part of the m2 consecutive time units; and M is an integer greater than or equal to 3, and m1, m2, and m3 are all integers greater than or equal to 1.

19. The apparatus according to claim 14, wherein start time of the second time domain resource is between start time of the first time domain resource and end time of the first time domain resource, and end time of the second time domain resource is greater than the end time of the first time domain resource.

20. The apparatus according to claim 19, wherein the first symbol comprises a $1^{st}$ time unit to an $M^{th}$ time unit, the first time domain resource comprises an $i^{th}$ time unit to a $j^{th}$ time unit, the second time domain resource comprises a $p^{th}$ time unit to a $q^{th}$ time unit, the $p^{th}$ time unit is between the $i^{th}$ time unit and the $j^{th}$ time unit, and the $q^{th}$ time unit is between the $j^{th}$ time unit and the $M^{th}$ time unit.

21. The apparatus according to any one of claims 14 to 20, wherein the start time of the first time domain resource is greater than or equal to start time of the first symbol.

22. The apparatus according to claim 21, wherein the end time of the second time domain resource is less than or equal to end time of the first symbol.

23. The apparatus according to claim 22, wherein the first symbol is an automatic gain control AGC symbol.

24. The apparatus according to claim 21, wherein the first symbol further comprises a fifth time domain resource, the fifth time domain resource is for switching from completing receiving the sensing echo to starting to send or receive a second symbol, and the second symbol is adjacent to the first symbol; and start time of the fifth time domain resource is the same as the end time of the second time domain resource.

25. The apparatus according to claim 24, wherein the first symbol is a guard period GAP symbol.

26. The apparatus according to any one of claims **14** to 25, wherein the sensing echo is an echo corresponding to the sensing sequence.

27. A communication apparatus, wherein the communication apparatus comprises a processor, wherein the processor is coupled to a memory; and the memory is configured to store computer instructions, and when the processor executes the instructions, the communication apparatus is caused to perform the method according to any one of claims 1 to 13.

28. A communication chip, wherein the communication chip stores instructions, and when the chip runs on a communication device, the method according to any one of claims 1 to 13 is implemented.

29. A computer-readable storage medium, wherein the computer-readable storage medium comprises a computer program or instructions, and the computer program or the instructions, when run on a computer, cause the computer to perform the method according to any one of claims 1 to 13.

30. A computer program product, wherein the computer program product comprises a computer program or instructions, and when the computer program or the instructions run on a communication apparatus, the method according to any one of claims 1 to 13 is performed.

| AGC | DMRS | PSSCH | PSSCH | DMRS | PSSCH | PSSCH | DMRS | PSSCH | PSSCH | DMRS | PSSCH | PSSCH | Guard |
|---|---|---|---|---|---|---|---|---|---|---|---|---|---|
| | PSCCH | | | | | | | | | | | | |

**FIG. 1**

| AGC | PSSCH | PSSCH | DMRS | PSSCH | PSSCH | PSSCH | PSSCH | PSSCH | PSSCH | DMRS | PSSCH | Guard | |
|---|---|---|---|---|---|---|---|---|---|---|---|---|---|
| | PSCCH | | | | | | | | | | | | |

**FIG. 2**

| AGC | PSSCH | PSSCH | DMRS | PSSCH | PSSCH | PSSCH | PSSCH | DMRS | PSSCH | Guard | AGC | PSFCH | Guard |
|---|---|---|---|---|---|---|---|---|---|---|---|---|---|
| | PSCCH | | | | | | | | | | | | |

**FIG. 3**

| PSBCH | S-PSS | S-PSS | S-SSS | S-SSS | PSBCH | PSBCH | PSBCH | PSBCH | PSBCH | PSBCH | PSBCH | PSBCH | Guard |
|---|---|---|---|---|---|---|---|---|---|---|---|---|---|---|

**FIG. 4**

Terminal
apparatus

Terminal
apparatus

Terminal
apparatus

FIG. 5

| S601: Determine an SL slot |
|---|

| S602: Send a sensing sequence on a first time domain resource, and/or receive a sensing echo on a second time domain resource |
|---|

FIG. 6

t1

t2

FIG. 7

FIG. 8

FIG. 9

p$^{th}$ time unit

i$^{th}$ time unit

q$^{th}$ time unit

j$^{th}$ time unit

M$^{th}$ time unit

M time units

(j–i+1) time units

(q–p+1) time units

FIG. 10

FIG. 11

FIG. 12

FIG. 13

FIG. 14

FIG. 15

FIG. 16

FIG. 17

SL slot

AGC

GAP

t1

ts=t2=16.66 μs

FIG. 18

EP 4 712 628 A1

SL slot

AGC | | | | | | | | | | | | | GAP

$t1 = 1.04\ \mu s$

$ts = t2 = 8.33\ \mu s$

FIG. 19

SL slot

AGC

GAP

ts=16.66 μs

t5=10 μs

t2=6.66 μs

t1

FIG. 20

FIG. 21

FIG. 22

FIG. 23

## INTERNATIONAL SEARCH REPORT

| International application No. |
|---|
| **PCT/CN2024/097515** |

**A.   CLASSIFICATION OF SUBJECT MATTER**

H04W72/0446(2023.01)i

According to International Patent Classification (IPC) or to both national classification and IPC

**B.   FIELDS SEARCHED**

Minimum documentation searched (classification system followed by classification symbols)

IPC: H04W H04L H04B H04M

Documentation searched other than minimum documentation to the extent that such documents are included in the fields searched

Electronic data base consulted during the international search (name of data base and, where practicable, search terms used)

CNTXT, CNKI, ENTXT, ENTXTC, 3GPP: 感知信号, 感知序列, 回波, 发送, 接收, 时隙, 侧链路, 侧行链路, SL, sensing, echo, time slot, timeslot

**C.   DOCUMENTS CONSIDERED TO BE RELEVANT**

| Category* | Citation of document, with indication, where appropriate, of the relevant passages | Relevant to claim No. |
|---|---|---|
| A | CN 115379569 A (HUAWEI TECHNOLOGIES CO., LTD.) 22 November 2022 (2022-11-22) description, paragraphs 0070-0144 | 1-30 |
| A | CN 114071405 A (HUAWEI TECHNOLOGIES CO., LTD.) 18 February 2022 (2022-02-18) entire document | 1-30 |
| A | CN 115118402 A (HUAWEI TECHNOLOGIES CO., LTD.) 27 September 2022 (2022-09-27) entire document | 1-30 |
| A | US 2022110129 A1 (QUALCOMM INC.) 07 April 2022 (2022-04-07) entire document | 1-30 |

☐ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **06 September 2024** | **06 September 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

| International application No. |
| --- |
| **PCT/CN2024/097515** |

| Patent document cited in search report | | | Publication date (day/month/year) | Patent family member(s) | | | Publication date (day/month/year) |
| --- | --- | --- | --- | --- | --- | --- | --- |
| CN | 115379569 | A | 22 November 2022 | None | | | |
| CN | 114071405 | A | 18 February 2022 | None | | | |
| CN | 115118402 | A | 27 September 2022 | None | | | |
| US | 2022110129 | A1 | 07 April 2022 | US | 11844055 | B2 | 12 December 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310688331